# EUROPEAN PATENT SPECIFICATION

(11) **EP 0 444 230 B1**
(45) Date of publication and mention of the grant of the patent: **12.07.1995**
(21) Application number: 90104030.3
(22) Date of filing: 01.03.1990
(51) Int. Cl.: C08J 5/18

(54) **Cold water soluble film**
In kaltem Wasser löslicher Film
Film soluble dans l'eau froide

(43) Date of publication of application: 04.09.1991
(73) Proprietor: AICELLO CHEMICAL COMPANY LIMITED, Toyohashi-shi, Aichi-ken 441-11 (JP)
(72) Inventor: Suzuki, Tsutomu, Toyohashi-shi, Aichi-ken (JP); Matsumoto, Takayuki, Tokoyashi-shi, Aichi-ken (JP)
(74) Representative: Boeters, Hans Dietrich, Dr.

(56) References cited:
- GB-A- 2 091 276
- DATABASE WPIL, no. 87-260142 [37], Derwent Publications Ltd, London, GB;& JP-A-62 179 550
- DATABASE WPIL, no. 78-74920A [42], Derwent Publications Ltd, London, GB;& JP-A-53 102 937

## Description

### Background of the Invention

The present invention relates to a film easily soluble in cold water and more specifically to a film easily soluble in cold water, which comprises a water soluble polymer obtained by saponifying a copolymer of an allyl ester, a vinyl ester and an unsaturated carboxylic acid and/or its anhydride and which is suitable for, in particular preparing a package which can directly be thrown into water.

Recently, water soluble films have been used as packaging materials. In particular, they have been used for packaging water soluble or water dispersible solid materials, which are toxic to the user, which must be correctly dispensed upon empolying the same, and/or which are difficult to remove from human body when they are attached thereto. As such solid materials there may be mentioned, for instance, fine powdery water soluble or water dispersible materials such products for cleaning as detergents and bleaching agents; such agrochemicals as herbicides, insecticides, fungicides and pesticides, and pigments, dyestuffs and other chemical agents. In this respect, such a fine powdery material is wrapped with a water soluble film and then the wrapped material is in general added to water as it is without taking off the film. Therefore, it is required that the film for packaging should be dissolved therein within a short period of time to thereby dissolve and disperse the fine powdery material into water. This in turn requires that the film used for wrapping the material should be easily soluble in cold water.

To date, polyvinyl alcohol (hereinafter referred to as "PVA" for simplicity) has been used as a material for forming such a water soluble film. In this connection, the completely saponified PVA is hardly soluble in cold water and, therefore, PVA partially saponified has been used for such a purpose. The partially saponified PVA is certainly easily soluble in cold water, but it undergoes additional saponification when it is brought into contact with any alkaline or acidic material, which leads to the lowering of stability with time. In particular, it becomes hardly soluble in cold water with the lapse of time, for instance, 2 to 3 months later.

There has been proposed a method in which PVA fiber is modified with an allyl alcohol to have an increased mechanical strength (USP. 2,909,502).

The cold water solubility of a film comprised of PVA modified with allyl alcohol is, however, greatly influenced when it is brought into contact with an alkaline or an acidic material.

JP-A-62.179 550 describes a water soluble copolymer prepared by copolymerizing allyl acetate with vinyl acetate and saponificating same. There has, however, still been a demand for improving the known water soluble films.

### Summary of the Invention

Accordingly, it is an object of the present invention to provide a film easily soluble in cold water whose cold water solubility is not impaired even if it is brought into contact with either alkaline materials or acidic materials for a long period of time.

The inventors of the present invention have conducted various studies to achieve the foregoing object and as a result have found that water soluble films composed of specific water soluble polymers are not impaired in their solubility in cold water even if they come in contact with an alkaline material or an acidic material for a long perod of time. The present invention has been completed based on such a finding.

According to the present invention, there is provided a film easily soluble in cold water which comprises, as a film-forming material, a water soluble copolymer whose degree of saponification is not less than 70 mol % and which is composed of 3 to 30 mol % of allyl ester, 96.5 to 65 mol % of vinyl ester and 0.5 to 5 mol % of unsaturated carboxylic acid and/or its anhydride.

### Detailed Explanation of the Invention

The preparation of the copolymer composed of allyl ester, vinyl ester and unsaturated carboxylic acid and/or its anhydride as used herein for preparing water soluble polymer and the saponification of the same can be carried out according to any known methods disclosed in, for instance, Japanese Patent laid-open (hereunder referred to as "J. P. KOKAI") No. 53-102937.

First of all, the copolymerization of an allyl ester, a vinyl ester and an unsaturated carboxylic acid and/or its anhydride can be effectd in the presence of a solvent such a lower alcohol as methanol and a polymerization catalyst such as 2,2'-azobisisobutyronitrile or diisopropyldicarbonateperoxide and N,N'-dimethylaniline. The content of the allyl ester moiety in the copolymer ranges from 3 to 30 mol % and preferably 5 to 25 mol %. This is because, if the content thereof is less than 3 mol %, saponified products thereof are inferior in solubility in cold water and the solubility in cold water thereof is impaired when they are brought into contact with either an alkaline or acidic material. On the other hand, if it is more than 30 mol %, the strenght of the resultant film becomes low and whereby the film is not acceptable as a material for packaging. The content of the unsaturated carboxylic acid and its anhydride in the copolymer ranges from 0.5 to 5 mol % and preferably 1 to 3 mol %. The degree of polymerization of the copolymer is not critical, but perferably it ranges from 200 to 3,000.

The copolymer thus prepared can be saponified by adding an acid or an alkali to an alcohol solution or an aqueous alcohol solution of the copolymer. Examples of alcohols include methanol and ethanol and methanol is preferably used as a solvent among others. A catalyst for saponification may be used and examples thereof include such an alkali catalyst as sodium hydroxide and sodium methylate and such an acid catalyst as sulfuric acid and hydrochloric acid. The degree of saponification of the copolymer, more specifically that of allyl ester and vinyl ester components, is not less than 70 mol % and preferably not less than 90 mol %. This is because, the solubility thereof in cold water becomes low if the degree of saponification is outside the foregoing range.

The saponified copolymer thus produced is heat dried in accordance with a method commonly employed and is pulverized according to need to obtain a water soluble polymer used in preparing the film of this invention.

The dregree of polymerization of the copolymer may be within the range of from 200 to 3,000.

Examples of the allyl esters as used herein are allyl formate, allyl acetate, allyl butyrate, allyl caproate and allyl maleate. Examples of the vinyl esters used in the present invention include vinyl formate, vinyl acetate, vinyl propionate, vinyl butyrate and vinyl laurate. Inter alia, particularly preferred examples thereof are allyl acetate and vinyl acetate because they are less expensive and are easily available. Each of the allyl and vinyl ester components may be used alone or in combination of two or more of them. Examples of an unsaturated carboxylic acid and its anhydride are crotonic acid, (meth) acrylic acid, maleic acid, maleic anhydride, itaconic acid, itaconic anhydride, furmaric acid and fumaric anhydride, fumalic acid and fumalic anhydride.

The film easily soluble in cold water in accordance with the present invention can be obtained by utilizing the foregoing water-soluble polymer as a film-forming material. The film may be produced by any known methods such as casting and extrusion.

The thickness of the film is not critical, but preferred range thereof is 10 to 150 microns.

The film of the present invention may contain a plasticizer for the water soluble polymer according to need. Examples of preferred plasticizers are glycerin, diethylene glycol, triethylene glycol, polyethylene glycol, polyglycerol, tetraethylene glycol, triethanolamine, 1,3-butanediol, triethanolamine acetate and ethanol acetamide.

The film easily soluble in cold water in accordance with the present invention may further comprise, for instance, water-soluble polymers such as PVA, starches, cellulose derivatives, polyacrylic acids and alkali metal salts thereof; aqueous emulsions; suspensions; or pigments such as clay and titanium oxide, if the effects of the present invention are not impaired at all.

As discussed above in detail, the film of the present invention is easily soluble in cold water and such solubility in cold water is not lowered even if it comes into contact with either alkaline or acidic materials. Therefore, the film of this invention is suitable for wrapping water soluble or water-dispersible solid materials, which are toxic to the user, which must be correctly dispensed upon employing the same, and which are difficult to remove from human body when they are attached thereto. Such a package can be used as it is, for example, by directly throwing it into water. The film of the present invention can suitably be used as wrapping materials for use in packaging various materials such as agrochemicals and chemical agents which are wrapped in a packaging film and the packaged materials are directly thrown into water in the wrapped state when they are used (so-called direct throwing type packaged materials).

The present invention will hereunder be explained in more detail with reference to the following non-limitative working examples and reference examples and the effects practically achieved by the present invention will also be discussed in detail below in comparison with the following Comparative Examples.

In the following examples, the terms "part(s)" and "%" mean "part(s) by weight" and "% by weight" respectively unless otherwise specified.

### Example 1

There were introduced 1,000 parts of vinyl acetate and 25 parts of allyl acetate and 15 parts of maleic anhydride into a flask provided with a stirring machine, a thermometer, a dropping funnel and a reflux condenser, the air in the system was replaced with N₂ gas and then the termperature of the system was raised to 60 °C. To the system there was added 10 parts of 2,2'-azobisisobutyronitrile in 300 parts of methanol to initiate polymerization of the monomers. After the initiation of the polymerization, 125 parts of allyl acetate was dropwise added to the system at a constant rate over 5 hours and the polymerization was stopped after the lapse of additional one hour. At this stage, the concentration of solid material in the system was 45 % and the overall yield of polymer with respect to the total amount of the monomers was thus 55 %. Unreacted vinyl acetate and allyl acetate were evaporated off under a reduced pressure introducing methanol vapour to obtain 40 % methanol solution of the resultant copolymer. It was determined that the resultant copolymer comprised 10.1 mol % of allyl acetate, 89 mol % of vinyl acetate and 0.9 mol % of maleic anhydride by quantitatively analyzing the amount of the unreacted allyl acetate, vinyl acetate and maleic anhydride.

100 Parts of the methanol solution of the copolymer was maintained at 40 °C while continously stirring, 15 parts of 1 N methanolic caustic soda solution was added thereto and stirred sufficiently and thereafter the resulting solution was allowed to stand. After 30 minutes, the solidified polymer was pulverized with a pulverizer, washed with methanol and then dried to obtain powdery polymer.

The powdery polymer was dissolved in water and viscosity thereof was determined at 30 °C and it was found to be 10 cps at a solid content of 4 %. In addition, the degree of saponification of the powder was 98 mol %.

### Example 2

There were introduced 1,000 parts of vinyl acetate, 50 parts of allyl acetate and 30 parts of itaconic acid into a flask similar to that used in Example 1 and the air in the system was replaced with N₂ gas and then the temperature of the system was raised to 60 °C. To the system there was added 5 parts of 2,2'-azobisisobutyronitrile in 260 parts of methanol to initiate polymerization of the monomers. After the initiation of the polymerization, 250 parts of allyl acetate was dropwise added to the system at a constant rate over 4 hours. The polymerization was stopped 5 hours after the initiation of the polymerization. At this stage, the content of solid material in the system was 52 %. Then, unreacted allyl acetate and vinyl acetate were forced out according in the same manner as in Example 1 to obtain 48 % methanolic solution of the resultant copolymer. It was confirmed by the same quantitative analysis as in Example 1 that the resultant copolymer comprised 18.8 mol % of allyl acetate, 79.3 mol % of vinyl acetate and 1.9 mol % of itaconic acid.

As in Example 1, 100 parts of the methanolic solution of the copolymer was maintained at 40 °C while continuously stirring it, 13 parts of 1 N methanolic caustic soda solution was added thereto to form solid polymer and the polymer was pulverized, washed and dried to obtain powdery polymer.

The powdery polymer was dissolved in water and viscosity thereof was determined at 30 °C and it was found to be 15 cps at a solid content of 4 %. In addition, the degree of saponification of the powder was 94 mol %.

### Example 3

There were introduced 1,000 parts of vinyl propionate and 25 parts of allyl acetate and 40 parts of maleic anhydride into a flask similar to that used in Example 1, the air in the system was replaced with N₂ gas and then the temperature of the system was raised to 60 °C. To the system there was added 10 parts of 2,2'-azobisisobutyronitrile in 300 parts of methanol to initiate polymerization of the monomers. After the initiation of the polymerization, 100 parts of allyl acetate was dropwise added to the system at a constant rate over 5 hours and the polymerization was stopped after the lapse of additional one hour. At this stage, the content of solid material in the system was 45 %. Unreacted vinyl propionate and allyl acetate were forced out in the same procedure as in Example 1 to obtain 43 % methanol solution of the resultant copolymer. It was confirmed by the same quantitative analysis as in Example 1 that the resultant copolymer comprised 8.6 mol % of allyl acetate, 88.3 mol % of vinyl propionate and 3 mol % maleic anhydride.

As in Example 1, 100 parts of the methanolic solution of the copolymer was maintained at 40 °C while continuously stirring it, 13 parts of 1 N methanolic caustic soda solution was added thereto to form solid polymer and the polymer was pulverized, washed and dried to obtain powdery polymer.

The powdery polymer was dissolved in water and viscosity thereof was determined at 30 °C and it was found to be 13 cps at a solid content of 4 %. In addition, the degree of saponification of the powder was 96 mol %.

### Example 4

The powdery polymer obtained in Example 1 was dissolved in water to prepare 12 % aqueous solution thereof.

This aqueous solution was casted on a horizontal polyester plate having a smooth surface utilizing an applicator and then was dried in an oven to obtain a transparent uniform film having a thickness of 25 »m.

A bag of 5 x 5 cm in size was made from the resultant film. 10 g of a detergent for washing (manufactured and sold by Lion Corporation under the trade name of Top) was charged into the bag and it was heatsealed. In addition, sodium bicarbonate powder, alminum sulfate powder and a insecticide (manufactured and sold by Sumitomo Chemical Industry Co., under the trade name of MEP ZAI) were also packed in such bags and heatsealed.

These packages were stored for one year during which a film having a size of 2 x 2 cm was cut from each sample after the lapse of 6 months and one year and was immersed in water at 20 °C to determine the time required for complete dissolution thereof (time requirements for dissolution of film). The results obtained are summarized in Table 1 given below. As seen from the results listed in Table 1, no change in solubility of the film with time was observed and excellent solubility in cold water thereof was held in all the samples examined.

### Example 5

The same procedures as in Example 4 were repeated except for using the powdery polymer prepared in Example 2 in place of that obtained in Example 1 and thus the change in water-solubility of the film with time due to the influence of the packaged detergent and chemical agents was determined. The results thus obtained are summarized in Table 1 below. In this case, the thickness of the film was 30 »m. As seen from the results listed in Table 1, each film substantially retained its excellent solubility in cold water with respect to all the detergent and chemical agents examined.

### Example 6

The powdery polymer prepared in Example 3 and 10 % of glycerin were dissolved in water to form 12 % aqueous solution of the polymer. Using this solution, films were produced and the change in cold water solubility thereof with time due to the coexistence of various agents was determined according in the same manner as in Example 4. The results observed are listed in Table 1. In this Example, the thickness of the film was 35 »m.

As seen from the results listed in Table 1, the films exhibited only a small change in the solubility in cold water with time even under the influence of any coexisting detergent and chemical agents examined.

### Comparative Example 1

Films were prepared according in the same manner as in Example 4 except for using, in place of the powdery polymer obtained in Example 1, a modified PVA containing 10 mol % of allyl acetate, having a degree of saponification of 96 mol % and a viscosity of 13 cps (determined at 30 °C, 4 % aqueous solution) and likewise the change, with time, in cold water-solubility of the films due to the influence of various detergent and chemical agents was determined. The results observed are summarized in Table 1. In this Comparative Example 1, the thickness of the films were 25 »m.

As seen from the results listed in Table 1, the solubility of the films in cold water was greatly influenced by detergent and chemical agents.

### Comparative Example 2

Films were prepared according in the same manner as in Example 5 except for using, in place of the powdery polymer obtained in Example 2 a modified PVA containing 1.8 mol % of itaconic acid and having a degree of saponification of 93 mol % and a viscosity of 16 cps (determined at 30 °C, 4 % aqueous solution) and likewise the change, with time, in cold water solubility of the films due to the influence of various detergent and chemical agents was determined. The results observed are summarized in Table 1. In this Comparative Example 2, the thickness of the films were 30 »m. This film was soluble in cold water when the detergent and chemical agents were alkaline materials, but they become insoluble in cold water when they brought into contact with acidic materials.

### Comparative Example 3

Films were prepared according in the same manner as in Example 6 except for using, in place of the powdery polymer obtained in Example 3, a modified PVA containing 2 mol % allyl acetate and 7 mol % of maleic anhydride and having a degree of saponification of 95 mol % and a viscosity of 16 cps (determined at 30 °C, 4 % aqueous solution) and likewise the change, with time, in cold water-solubility of the films due to the influence of various pharmaceutical agents and chemicals was determined. The results observed are summarized in Table 1. In this Comparative Example 3, the thickness of the films were 35 »m. As seen from the results listed in Table 1, the solubility of the films in cold water was greatly influenced by all the detergent and chemical agents examined.

### Comparative Example 4

Films were prepared according in the same manner as in Example 4 except for using, in place of the powdery polymer obtained in Example 1, PVA having a degree of saponification of 88 mol % and a viscosity of 7 cps (determined at 30 °C, 4 % aqueous solution) and likewise the change, with time, in cold water-solubility of the films due to the influence of various agents was determined. The results observed are summarized in Table 1. In this Comparative Example 1, the thickness of the films were 25 »m. As seen from the results listed in Table 1, the solubility of the films in cold water was lost.

**Table 1**

| Time Requirement for Desolution of film | | | | | |
|---|---|---|---|---|---|
| Ex. No. | Storage Time | Detergent (sec) | Sodium Bicarbonate (sec) | Aluminum Sulfate (sec) | Insecticide (sec) |
| 1 | 0 | 7 | 7 | 7 | 7 |
| | 6 month | 8 | 7 | 8 | 7 |
| | 12 month | 10 | 9 | 9 | 9 |
| 2 | 0 | 22 | 22 | 22 | 22 |
| | 6 month | 28 | 26 | 30 | 25 |
| | 12 month | 35 | 29 | 34 | 30 |
| 3 | 0 | 30 | 30 | 30 | 30 |
| | 6 month | 33 | 31 | 38 | 36 |
| | 12 month | 35 | 33 | 38 | 38 |
| 1* | 0 | 10 | 10 | 10 | 10 |
| | 6 month | 132 | 120 | 88 | 111 |
| | 12 month | insoluble | insoluble | 127 | 143 |
| 2* | 0 | 25 | 25 | 25 | 25 |
| | 6 month | 41 | 35 | insoluble | insoluble |
| | 12 month | 63 | 56 | insoluble | insoluble |
| 3* | 0 | 33 | 33 | 33 | 33 |
| | 6 month | 125 | 103 | 145 | 121 |
| | 12 month | 144 | 129 | insoluble | insoluble |
| 4* | 0 | 9 | 9 | 9 | 9 |
| | 6 month | insoluble | insoluble | insoluble | insoluble |
| | 12 month | insoluble | insoluble | insoluble | insoluble |

| | | | | | |
|---|---|---|---|---|---|
| *; comparative examples | | | | | |

## Claims

1. A film easily soluble in cold water which comprises a water soluble copolymer composed of 3 to 30 mol % of allyl ester, 96.5 to 65 mol % of vinyl ester and 0.5 to 5 mol % of unsaturated carboxylic acid and/or its anhydride and having a degree of saponification of not less than 70 mol %.

2. A film as set forth in claim 1 wherein the degree of polymerization of the copolymer ranges from 200 to 3,000.

3. A film as set forth in claim 1 or 2 wherein the allyl ester is at least one member selected from the group consisting of allyl formate, allyl acetate, allyl propionate, allyl butyrate, allyl caproate and allyl maleate.

4. A film as set forth in any of the preceding claims wherein the vinyl ester is at least one member selected from the group consisting of vinyl formate, vinyl acetate, vinyl propionate, vinyl butyrate and vinyl laurate.

5. A film as set forth in any of the preceding claims wherein the unsaturated carboxylic acid and/or its anhydride is at least one member selected from crotonic acid, (meth)acrylic acid, maleic acid, maleic anhydride, itaconic acid, itaconic anhydride, fumaric acid and fumaric anhydride.

6. A film as set forth in any of the preceding claims which further comprises at least one plasticizer for the water soluble copolymer selected from the group consisting of glycerin, diethylene glycol, triethylen glycol, polyethylene glycol, polyglycerol, tetraethylene glycol, triethanolamine, 1,3-butanediol, triethanolamine acetate and acetamide.

## Patentansprüche

1. In kaltem Wasser leicht lösliche Folie, enthaltend ein wasserlösliches Copolymer; das aus 3 bis 30 Mol% Allylester, 96,5 bis 65 Mol% Vinylester und 0,5 bis 5 Mol% einer ungesättigten Carbonsäure und/oder deren Anhydrid zusammengesetzt ist und einen Verseifungsgrad von nicht weniger als 70 Mol% hat.

2. Folie nach Anspruch 1, wobei der Polymerisationsgrad des Copolymers in einem Bereich von 200 bis 3.000 liegt.

3. Folie nach Anspruch 1 oder 2, wobei der Allylester wenigstens ein Mitglied ausgewählt unter Allylformiat, Allylacetat, Allylpropionat, Allylbutyrat, Allylcaproat und Allylmaleat ist.

4. Folie nach einem der vorhergehenden Ansprüche, wobei der Vinylester wenigstens ein Mitglied ausgewählt unter Vinylformiat, Vinylacetat, Vinylpropionat, Vinylbutyrat und Vinyllaurat ist.

5. Folie nach einem der vorhergehenden Ansprüche, wobei die ungesättigte Carbonsäure und/oder deren Anhydrid wenigstens ein Mitglied ausgewählt unter Crotonsäure, (Meth)acrylsäure, Maleinsäure, Maleinsäureanhydrid, Itakonsäure, Itakonsäureanhydrid, Fumarsäure und Fumarsäureanhydrid ist.

6. Folie nach einem der vorhergehenden Ansprüche, weiter enthaltend wenigstens einen Weichmacher für das wasserlösliche Copolymer, der ausgewählt wird unter Glycerin, Diethylenglycol, Triethylenglycol, Polyethylenglycol, Polyglycerol, Tetraethylenglycol, Triethanolamin, 1,3-Butandiol, Triethanolaminacetat und Acetamid.

## Revendications

1. Une pellicule facilement soluble dans l'eau froide, qui comprend un copolymère soluble dans l'eau constitué de 3 à 30 % molaire d'ester allylique, de 96,5 à 65% molaire d'ester vinylique et de 0,5 à 5% molaire d'acide carboxylique insaturé et/ou de son anhydride et présentant un degré de saponification non inférieur à 70% molaire.

2. Une pellicule telle que spécifiée dans la revendication 1, dans laquelle le degré de polymérisation du copolymère se situe dans la gamme de 200 à 3 000.

3. Une pellicule telle que spécifiée dans la revendication 1 ou 2, dans laquelle l'ester allylique est au moins un élément choisi dans le groupe constitué par le formiate d'allyle, l'acétate d'allyle, le propionate d'allyle, le butyrate d'allyle, le caproate d'allyle et le maléate d'allyle.

4. Une pellicule telle que spécifiée dans l'une quelconque des revendications précédentes dans laquelle l'ester vinylique est au moins un élément choisi dans le groupe constitué par le formiate de vinyle, l'acétate de vinyle, le propionate de vinyle, le butyrate de vinyle et le laurate de vinyle.

5. Une pellicule telle que spécifiée dans l'une quelconque des revendications précédentes, dans laquelle l'acide carboxylique insaturé et/ou son anhydride est au moins un élément choisi parmi l'acide protonique, l'acide(méth)acrylique, l'acide maléique, l'anhydride maléique, l'acide itaconique, l'anhydride itaconique, l'acide fumarique et l'anhydride fumarique.

6. Une pellicule telle que spécifiée dans l'une quelconque des revendications précédentes, qui comporte en outre au moins un agent plastifiant pour le copolymère soluble dans l'eau, choisi dans le groupe constitué par la glycérine, le diéthylène glycol, le triéthylène glycol, le polyéthylène glycol, le polyglycérol, le tétraéthylène glycol, la triéthanolamine, le 1,3-butanediol, l'acétate de triéthanolamine et l'acétamide.
